# EUROPÄISCHE PATENTSCHRIFT

(11) **EP 2 874 564 B1**
(45) Veröffentlichungstag und Bekanntmachung des Hinweises auf die Patenterteilung: **01.04.2020**
(21) Anmeldenummer: 13739663.6
(22) Anmeldetag: 17.07.2013
(51) Int. Cl.: A61C 8/00

(54) **ZAHNIMPLANTATAUFBAUSYSTEM**
DENTAL IMPLANT ABUTMENT SYSTEM
SYSTÈME DE CONSTRUCTION D'IMPLANT DENTAIRE

(30) Priorität: 18.07.2012 DE 102012106469; 18.07.2012 DE 102012106468; 18.07.2012 DE 202012102746 U
(43) Veröffentlichungstag der Anmeldung: 27.05.2015
(73) Patentinhaber: Spindler, Bruno, 77728 Oppenau (DE)
(72) Erfinder: Spindler, Bruno, 77728 Oppenau (DE)
(74) Vertreter: Thämer, Wolfgang
(86) Internationale Anmeldenummer: PCT/EP2013/065089
(87) Internationale Veröffentlichungsnummer: WO 2014/012973

(56) Entgegenhaltungen:
- EP-A1- 0 473 262
- WO-A1-97/27816
- WO-A2-2006/081815
- DE-U1-202005 017 816
- US-A- 5 759 036
- US-A- 6 007 336
- US-A1- 2004 241 610

## Beschreibung

Die vorliegende Erfindung betrifft ein Zahnimplantatsystem mit einem Abutmentaufsatz, einem Heilungskappenklebekörper, einem Kronenklebekörper und einem Abformpfosten.

Beim Einsetzen eines Zahnimplantats in eine Mundhöhle kann man die individuell gefertigte Zahnkrone auf einen Kronenklebekörper zementieren, der wiederum auf die Klebebasis eines Abutmentaufsatzes aufgeklebt ist. Die Klebebasis für den Kronenklebekörper befindet sich mittig über dem Befestigungsabschnitt des Abutmentaufsatzes, der zum Befestigen des Abutmentaufsatzes auf dem Kieferimplantat dient. Wird jedoch die Zahnkrone gegenüber dem Abutmentaufsatz seitlich versetzt angeordnet, wirken in diesem Fall starke Hebel- oder Biegekräfte auf den zentral aufgeklebten Kronenklebekörper, so dass dieser zerstört werden kann.

Die EP 0 473 262 B1 beschreibt ein Implantat mit einem vielteiligen Abutmentaufsatz. Letzterer umfasst einen Adapter, eine Manschette, einen Stützträgerpfosten und zwei Schrauben. Dadurch ergeben sich zwischen dem dübelartigen Implantat und der vom Abutmentaufsatz getragenen Krone eine Vielzahl von Montagefugen.

Aus DE 20 2005 017 816 U1 ist ein Abformpfosten mit einem Befestigungsabschnitt zum Befestigen des Abformpfostens auf dem Kieferimplantat bekannt.

Aus der US 5 759 036 ist u.a. ein komplettes Zahnimplantatsystem bekannt, das verschiedene Abutments mit klebstoffführenden Nuten zeigt.

Es ist Aufgabe der vorliegenden Erfindung, ein Zahnimplantataufbausystem zu schaffen, das eine Zerstörung des Kronenklebekörpers durch auftretende Hebelkräfte verhindert und das an räumliche Gegebenheiten innerhalb einer Mundhöhle anpassbar ist.

Diese Aufgabe wird durch die Merkmale der Ansprüche 1, 7 und 8 gelöst. Vorteilhafte Ausführungsformen sind Gegenstand der Beschreibung der Zeichnungen und der abhängigen Ansprüche.

Gemäß einem ersten Aspekt wird die Aufgabe gelöst durch einen Abutmentaufsatz für ein Kieferimplantat mit einem Befestigungsabschnitt mit konischem Abschnitt zum Befestigen des Abutmentaufsatzes auf dem Kieferimplantat. Er hat eine gegenüber dem Befestigungsabschnitt seitlich versetzte Klebebasis zum Aufkleben eines Kronenklebekörpers als Basis für eine Zahnkrone oder zum Aufkleben eines Heilungskappenklebekörpers. Die Klebebasis umfasst einen Versetzungsabschnitt zum seitlichen Versetzen der Klebebasis gegenüber dem Befestigungsabschnitt und einen Verbindungsabschnitt zum Verbinden des Versetzungsabschnitts mit dem Befestigungsabschnitt. Die Klebebasis umfasst zwischen dem Versetzungsabschnitt und dem Verbindungsabschnitt eine Vertiefung zum Übertragen einer seitlich wirkenden Kraft. Der Befestigungsabschnitt umfasst einen Schraubkanal mit einem konisch zulaufenden Abschnitt zum Befestigen des Abutmentaufsatzes mittels einer konischen Befestigungsschraube. Der Abutmentaufsatz hat einen Einführungskanal zum Einführen einer Befestigungsschraube, wobei die Achse des Einführungskanals gegenüber der Achse des Schraubkanals seitlich abgewinkelt ist.

Der Abutmentaufsatz kann einen auf der Klebebasis aufgeklebten Kronenklebekörper oder einen auf der Klebebasis aufgeklebten Heilungskappenklebekörper umfassen. Die Klebebasis kann einen ovalen Querschnitt aufweisen, beispielsweise für kleine Backenzähne oder Prämolare. Die Klebebasis kann einen dreieckigen Querschnitt aufweisen, beispielsweise für Frontzähne. Die Klebebasis kann einen rhombenförmigen Querschnitt aufweisen, beispielsweise für große Backenzähne.

Durch die seitlich versetzte Klebebasis wird der technische Vorteil erreicht, dass Kräfte, die von oben auf den Kronenklebekörper wirken, auch bei seitlich versetzter Zahnkrone senkrecht auf den Abutmentaufsatz übertragen werden können. Dadurch wird der technische

Vorteil erreicht, dass das Auftreten von Hebelkräften vom Kronenklebekörper zum Abutmentaufsatz verhindert wird, die zu einer Zerstörung des Kronenklebekörpers und Fraktur der Klebebasis führen können. Durch die Möglichkeit, die Zahnkrone seitlich gegenüber dem Kieferimplantat versetzen zu können, kann das Implantatsystem besser an die räumlichen Gegebenheiten im Inneren der Mundhöhle angepasst werden. Die Verwendung des Kronenklebekörpers als Basis zum Aufkleben der Zahnkrone bietet den Vorteil, dass dieser individuell beschleifbar und anpassbar ist. Die Krafteinleitung und mechanische Stabilisierung bei nicht axialer Belastung und bei einer Entfernung einer Außenwand eines Führungskanals wird verbessert.

In einer erfindungsgemäßen Ausführungsform des Abutmentaufsatzes umfasst die Klebebasis einen Versetzungsabschnitt zum seitlichen Versetzen der Klebebasis gegenüber dem Befestigungsabschnitt und einen Verbindungsabschnitt zum Verbinden des Versetzungsabschnitts mit dem Befestigungsabschnitt. Dadurch wird beispielsweise der technische Vorteil erreicht, dass eine Kraft auf die Zahnkrone wirksam auf den Versetzungsabschnitt übertragen werden kann und Biegekräfte auf den Kronenklebekörper verhindert werden. Der Versetzungsabschnitt erlaubt zudem das Einbringen eines Gewindes oder einer Bohrung in die Klebebasis in vertikaler und horizontaler Richtung zur Verschraubung von Kronen, Stegen oder anderen prothetischen Hilfsteilen oder Versorgungen.

In einer weiteren vorteilhaften Ausführungsform des Abutmentaufsatzes ist die Breite des Versetzungsabschnittes kleiner als die Breite des Befestigungsabschnittes oder die Breite des Versetzungsabschnittes ist größer als die Breite des Befestigungsabschnittes oder die Breite des Versetzungsabschnittes ist gleich zu der Breite des Befestigungsabschnittes. Dadurch wird beispielsweise der technische Vorteil erreicht, dass sich die Zahnkrone an der Seite des Versetzungsabschnitts schmal ausbilden lässt oder eine seitlich voluminöse Klebebasis erzeugt wird, die Kräfte gut aufnehmen kann.

In einer erfindungsgemäßen Ausführungsform des Abutmentaufsatzes umfasst die Klebebasis zwischen dem Versetzungsabschnitt und dem Verbindungsabschnitt eine Vertiefung zum Übertragen einer seitlich wirkenden Kraft. Die Vertiefung kann eine im Querschnitt konkave Vertiefung sein. Eine erste Vertiefung kann auf einer ersten Seite der Klebebasis und eine zweite Vertiefung kann auf einer zweiten Seite der Klebebasis angeordnet sein. Dadurch wird beispielsweise der technische Vorteil erreicht, dass seitlich gerichtete Kräfte auf die Zahnkrone wirksam auf den Abutmentaufsatz übertragen werden können und eine Zerstörung des Kronenklebekörpers durch diese Kräfte verhindert wird.

In einer weiteren vorteilhaften Ausführungsform des Abutmentaufsatzes umfasst die Klebebasis einen umlaufenden Unterstützungsrand zum Unterstützen eines aufgeklebten Kronenklebekörpers oder Heilungskappenklebekörpers. Der umlaufende Unterstützungsrand kann einer Knochenkontur folgen. Dadurch wird beispielsweise der technische Vorteil erreicht, dass der Kronenklebekörper auf dem Unterstützungsrand des Abutmentaufsatzes aufliegt und sich die auf den Kronenklebekörper wirkende Kraft großflächig verteilt.

In einer weiteren vorteilhaften Ausführungsform des Abutmentaufsatzes umfasst der umlaufende Unterstützungsrand eine Rinne zum Einsetzen eines Randes des Kronenklebekörpers oder des Heilungskappenklebekörpers. Dadurch wird beispielsweise der technische Vorteil erreicht, dass der Kronenklebekörper bei einer Belastung in der Rinne Halt findet und nicht vom Unterstützungsrand abrutscht.

In einer weiteren vorteilhaften Ausführungsform des Abutmentaufsatzes umfasst der Befestigungsabschnitt einen Unterstützungsabschnitt zum seitlichen Unterstützen der Klebebasis. Dadurch wird beispielsweise der technische Vorteil erreicht, dass sich die Stabilität und Verwindungssteifigkeit des Abutmentaufsatzes verbessert.

In einer weiteren vorteilhaften Ausführungsform des Abutmentaufsatzes umfasst der Befestigungsabschnitt einen Verdrehsicherungsabschnitt zum Verhindern einer Verdrehung des Abutmentaufsatzes gegenüber dem Kieferimplantat. Der Verdrehsicherungsabschnitt ist beispielsweise eine Sechskantform. Dadurch wird beispielsweise der technische Vorteil erreicht, dass der Abutmentaufsatz nach dem Einsetzen in das Kieferimplantat seine Drehrichtung behält.

In einer weiteren vorteilhaften Ausführungsform des Abutmentaufsatzes umfasst der Befestigungsabschnitt einen konisch zulaufenden Abschnitt zum Verbreitern des Befestigungsabschnittes in Richtung der Klebebasis. Dadurch wird beispielsweise der technische Vorteil erreicht, dass sich die Festigkeit des Abutmentaufsatzes verbessert und im Inneren ein verbreiterter Schraubkanal verwendet werden kann.

In einer erfindungsgemäßen Ausführungsform des Abutmentaufsatzes umfasst der Abutmentaufsatz einen Einführungskanal zum Einführen einer Befestigungsschraube. Dadurch wird beispielsweise der technische Vorteil erreicht, dass die Befestigungsschraube auf einfache Weise an eine Befestigungsposition geführt wird.

In einer weiteren vorteilhaften Ausführungsform des Abutmentaufsatzes verläuft der Einführungskanal innerhalb der Klebebasis. Dadurch wird beispielsweise der technische Vorteil erreicht, dass die Klebebasis seitlich eine geschlossene, kantenlose Oberfläche aufweist und eine Beschädigung des Kronenklebekörpers verhindert wird.

In einer erfindungsgemäßen Ausführungsform des Abutmentaufsatzes umfasst der Befestigungsabschnitt einen Schraubkanal mit einem konisch zulaufenden Abschnitt zum Befestigen des Abutmentaufsatzes mittels einer konischen Befestigungsschraube. Dadurch wird beispielsweise der technische Vorteil erreicht, dass sich die durch die Befestigungsschraube ausgeübte Kraft auf den Abutmentaufsatz großflächig verteilt und eine Kontaktfläche zwischen Abutmentaufsatz und Befestigungsschraube erreicht wird, die verhindert, dass sich die Befestigungsschraube löst. Zudem werden Hohlräume, in denen sich Bakterien einnisten können, minimiert.

In einer erfindungsgemäßen Ausführungsform des Abutmentaufsatzes ist die Achse des Einführungskanals gegenüber der Achse des Schraubkanals seitlich abgewinkelt In einer nicht beanspruchten Ausführungsform des Abutmentaufsatzes ist die Achse des Einführungskanals identisch mit der Achse des Schraubkanals. Dadurch wird beispielsweise der technische Vorteil erreicht, dass die Klebebasis schmal ausgestaltet werden kann, während der Einführungskanal im Inneren der Klebebasis verläuft. Befindet sich ein Einführungskanal in Achsenrichtung des Schraubenkanals kann es erforderlich sein, dass dieser aus Platzmangel zum Gegenkiefer abgetrennt oder angeschrägt wird. Daneben wird ein zusätzlicher Raum für Kronenklebekörper und Außenwand der späteren Zahnkrone gewonnen. Bei identischen Achsen ergibt sich der Vorteil, dass der Abutmentaufsatz mit einfachen technischen Mitteln herstellbar ist.

In einer weiteren vorteilhaften Ausführungsform des Abutmentaufsatzes ist ein Öffnungswinkel des konisch zulaufenden Abschnitts des Schraubkanals gleich zu dem Winkel zwischen Einführungskanal und Schraubkanal. Dadurch wird beispielsweise der technische Vorteil erreicht, dass teilweise ein kantenloser Übergang zwischen Einführungskanal und Schraubkanal realisiert wird, so dass ein Verklemmen der Befestigungsschraube beim Einführen verhindert wird.

Ebenfalls offenbart ist ein Heilungskappenklebekörper zum Aufkleben auf einen Abutmentaufsatz nach dem ersten Aspekt mit einer Aussparung zum Aufnehmen einer gegenüber einem Befestigungsabschnitt seitlich versetzten Klebebasis. Der Heilungskappenklebekörper kann auf einem Abutmentaufsatz nach dem ersten Aspekt aufgeklebt sein. Die Aussparung kann im Querschnitt oval, dreieckig, oder rhombenförmig sein. Im Allgemeinen weist die Aussparung eine Form auf, die von einer rotationssymmetrischen Form abweicht. Der Heilungskappenklebekörper kann beispielsweise aus Kunststoff hergestellt sein. Dadurch wird beispielsweise der technische Vorteil erreicht, dass das Zahnfleisch um die versetzte Klebebasis in der gewünschten Form herum heilen kann.

In einer vorteilhaften Ausführungsform des Heilungskappenklebekörpers umfasst die Aussparung im Inneren einen Vorsprung zum Übertragen einer seitlich wirkenden Kraft auf die Klebebasis. Der Vorsprung kann ein im Querschnitt konvexer Vorsprung sein, wie beispielsweise eine sich in Aufsetzrichtung erstreckende Auswölbung. Ein erster Vorsprung kann auf einer ersten Seite der Aussparung und ein zweiter Vorsprung kann auf einer zweiten Seite der Aussparung angeordnet sein. Der Vorsprung dient zum Eingreifen in eine Vertiefung der Klebebasis. Dadurch wird beispielsweise der technische Vorteil erreicht, dass seitlich auf den Heilungskappenklebekörper wirkende Kräfte auf die Klebebasis übertragen werden und ein guter Formschluss gegenüber der Klebebasis erreicht wird.

In einer weiteren vorteilhaften Ausführungsform des Heilungskappenklebekörpers weist der Heilungskappenklebekörper einen im Querschnitt konkaven Seitenabschnitt auf. Der Seitenabschnitt wird beispielsweise durch eine Mulde in dem Heilungskappenklebekörper gebildet. Ein erster konkaver Seitenabschnitt kann auf einer ersten Seite des Heilungskappenklebekörpers und ein zweiter konkaver Seitenabschnitt kann auf einer zweiten Seite der Klebebasis angeordnet sein. Dadurch wird beispielsweise der technische Vorteil erreicht, dass das Zahnfleisch in den Bereichen der konkaven Seitenabschnitte mehr Platz zur Einheilung erhält, dadurch an Masse gewinnt, die nach Abheilung zielgerichtet zum Aufbau einer Zahnpapille geformt werden kann.

Ebenfalls offenbart ist ein beschleifbarer Kronenklebekörper zum Aufkleben auf einen Abutmentaufsatz als Basis für eine Zahnkrone mit einer Aussparung zum Aufnehmen einer gegenüber einem Befestigungsabschnitt seitlich versetzten Klebebasis. Die Aussparung kann im Querschnitt oval, dreieckig, oder rhombenförmig sein. Im Allgemeinen weist die Aussparung eine Form auf, die von einer rotationssymmetrischen Form abweicht. Der Kronenklebekörper kann auf einem Abutmentaufsatz nach dem ersten Aspekt aufgeklebt sein. Dadurch wird beispielsweise der technische Vorteil erreicht, dass ein für die seitlich versetzte Klebebasis geeigneter Kronenklebekörper bereitgestellt wird, der Kräfte großflächig auf die Klebebasis übertragen kann.

In einer vorteilhaften Ausführungsform des Kronenklebekörpers umfasst die Aussparung im Inneren einen Vorsprung zum Übertragen einer seitlich wirkenden Kraft auf die Klebebasis. Der Vorsprung kann ein im Querschnitt konvexer Vorsprung sein, wie beispielsweise eine sich in Aufsetzrichtung erstreckende Auswölbung. Ein erster Vorsprung kann auf einer ersten Seite der Aussparung und ein zweiter Vorsprung kann auf einer zweiten Seite der Aussparung angeordnet sein. Der Vorsprung dient zum Eingreifen in eine Vertiefung der Klebebasis. Dadurch wird beispielsweise ebenfalls der technische Vorteil erreicht, dass seitlich auf den Kronenklebekörper wirkende Kräfte auf die Klebebasis übertragen werden und ein guter Formschluss gegenüber der Klebebasis erreicht wird.

In einer weiteren vorteilhaften Ausführungsform des Kronenklebekörpers ist ein Seitenabschnitt des Kronenklebekörpers im Querschnitt konvex. Dadurch wird beispielsweise der technische Vorteil erreicht, dass sich das zuvor mit einem Heilungskappenklebekörper geformte Zahnfleisch, der einen im Querschnitt konkaven Seitenabschnitt aufweist, mit einer hohen Spannung um den Kronenklebekörper legt und das umgebende Zahnfleisch gerichtet verdrängt. Dadurch wird die Ausformung einer Zahnpapille, d.h. des Zahnfleisches zwischen zwei Zähnen oder Implantaten, begünstigt.

Gemäß einem weiteren Aspekt wird die Aufgabe durch einen Abformpfosten zum Aufsetzen auf ein Kieferimplantat mit einem Befestigungsabschnitt zum Befestigen des Abformpfostens auf dem Kieferimplantat und einem gegenüber dem Befestigungsabschnitt seitlich versetzten Abformpfostenkörper gelöst. Dadurch wird beispielsweise der technische Vorteil erreicht, dass ein für die seitlich versetzte Klebebasis geeigneter Abformpfosten bereitgestellt wird, dessen seitlich versetzter Abformpfostenkörper die räumlichen Gegebenheiten wiedergibt.

In einer erfindungsgemäßen Ausführungsform des Abformpfostens umfasst der Befestigungsabschnitt einen Unterstützungsabschnitt zum seitlichen Unterstützen des Abformpfostenkörpers. Dadurch wird beispielsweise der technische Vorteil erreicht, dass sich die Stabilität und Verwindungssteifigkeit des Abformpfostens erhöht.

In einer vorteilhaften Ausführungsform des Abformpfostens weist der Abformpostenkörper einen im Querschnitt gerade verlaufenden Seitenabschnitt auf. Dadurch wird beispielsweise der technische Vorteil erreicht, dass beim Abformen das zuvor mit einem Heilungskappenklebekörper geformte Zahnfleisch, der einen im Querschnitt konkaven Seitenabschnitt aufweist, an dieser Stelle sanft zur Seite gedrückt wird.

Gemäß einem weiteren Aspekt wird die Aufgabe durch ein Zahnimplantatsystem mit einem Abutmentaufsatz nach Anspruch 1, einen Heilungskappenklebekörper, einem Kronenklebekörper und einem Abformpfosten nach Anspruch 7 gelöst. Durch dieses Zahnimplantataufbausystem lassen sich die Vorteile der genannten Komponenten vereinen.

Gemäß einem weiteren Aspekt wird die Aufgabe durch ein Zahnimplantataufbausystem mit einem Heilungskappenklebekörper mit einem im Querschnitt konkaven Seitenabschnitt und einem Kronenklebekörper gelöst, bei dem der Seitenabschnitt des Kronenklebekörpers im Querschnitt konvex ist. Das Zahnimplantataufbausystem kann einen ersten Abutmentaufsatz, auf dem der Heilungskappenklebekörper aufgeklebt ist und einen zweiten Abutmentaufsatz umfassen, auf dem der Kronenklebekörper aufgeklebt ist. Dadurch wird beispielsweise der technische Vorteil erreicht, dass ein zwischenraumfreier Formschluss zwischen Kronenklebekörper und Zahnfleisch erreicht wird. Daneben kann das Zahnimplantataufbausystem einen Abformpfosten umfassen.

Ausführungsbeispiele der Erfindung sind in den Zeichnungen dargestellt und werden im Folgenden näher beschrieben.

Es zeigen:
Fig. 1 eine Übersicht über einzelne Komponenten des Zahnimplantataufbausystems;
Fig. 2 eine Querschnittsansicht eines Heilungskappenklebekörpers, eines Abformpfostens und eines Kronenklebekörpers;
Fig. 3 mehrere Ansichten einer ersten Ausführungsform eines Abutmentaufsatzes;
Fig. 4 eine Seitenansicht und eine Querschnittsansicht des Abutmentaufsatzes;
Fig. 5 mehrere Querschnittsansichten durch einen Abutmentaufsatz;
Fig. 6 eine Seitenansicht und eine Querschnittsansicht des Abutmentaufsatzes mit eingesetzter Befestigungsschraube;
Fig. 7 mehrere Ansichten einer zweiten Ausführungsform des Abutmentaufsatzes für maximale Abwinklung mit eingesetzter Befestigungsschraube;
Fig. 8 mehrere Ansichten einer dritten Ausführungsform des Abutmentaufsatzes;
Fig. 9 eine Seitenansicht und eine Querschnittsansicht des Heilungskappenklebekörpers;
Fig. 10 mehrere Ansichten des Abutmentaufsatzes mit aufgeklebtem Heilungskappenklebekörper und eingesetzter Befestigungsschraube;
Fig. 11 eine Seitenansicht und eine Querschnittsansicht eines Kronenklebekörpers für eine Zahnkrone;
Fig. 12 mehrere Ansichten des Abutmentaufsatzes mit aufgeklebtem Kronenklebekörper für eine Zahnkrone;
Fig. 13 mehrere Ansichten des Abutmentaufsatzes mit aufgeklebtem Kronenklebekörper für eine Zahnkrone und eingesetzter Befestigungsschraube;
Fig. 14 eine Seitenansicht und eine Querschnittsansicht des Abformpfostens;
Fig. 15 mehrere Ansichten des Abformpfostens;
Fig. 16 mehrere Ansichten des Abformpfostens mit eingesetzter Abformpfostenschraube, und
Fig. 17 mehrere Querschnittsansichten durch den Heilungskappenklebekörper, den Abformpfosten und den Kronenklebekörper.

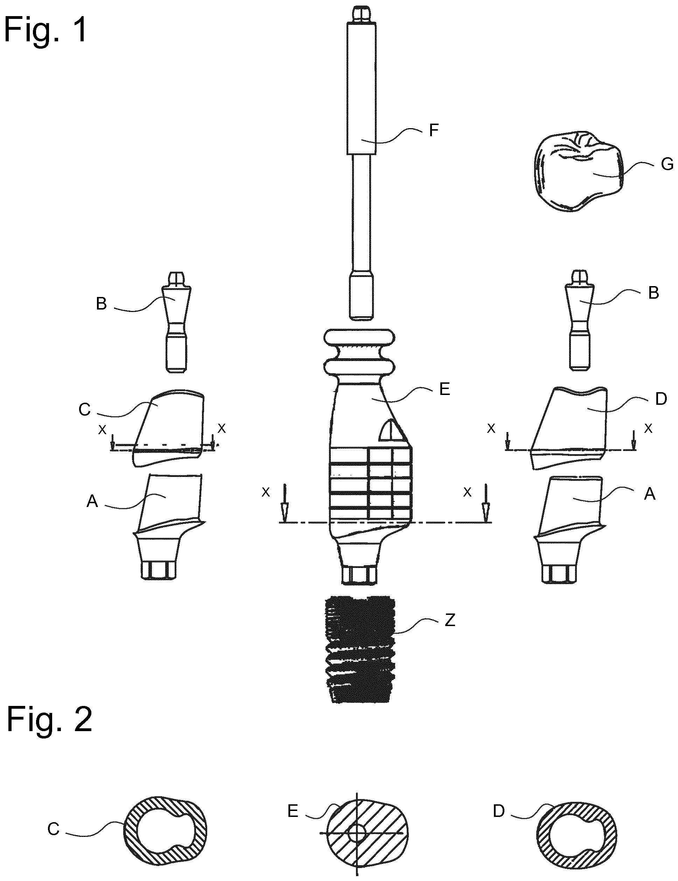

Fig. 1 zeigt eine Übersicht über einzelne Komponenten des Zahnimplantataufbausystems. Das Zahnimplantataufbausystem bildet ein formkongruentes Implantat-Aufbau- und Abformsystem und umfasst einen Abutmentaufsatz A, eine Abutmentschraube B für den Abutmentaufsatz A, einen Heilungskappenklebekörper C, einen Kronenklebekörper D als Basis zum Aufkleben einer Zahnkrone G, einen Abformpfosten E und eine Abformpfostenschraube F. Daneben sind in Fig. 1 eine individuelle Zahnkrone G und ein Kieferimplantat Z gezeigt.

Der Abutmentaufsatz A ist ein Teil der Suprakonstruktion für die mechanische Verbindung zwischen dem Kieferimplantat Z und der Zahnkrone G. Zu diesem Zweck wird der Abutmentaufsatz A mittels eines Befestigungsabschnittes an dem Kieferimplantat Z befestigt. Die Befestigung erfolgt in der Regel über eine Abutmentschraube B, die in ein Gewinde im Kieferimplantat Z eingedreht wird und dadurch den Abutmentaufsatz A auf dem Kieferimplantat Z befestigt. Der Abutmentaufsatz A ist in der Regel aus Zirkondioxid, Titan, einer Titanlegierung oder titannitrid-beschichtetem Titan hergestellt.

Das Kieferimplantat Z ist ein in den Kieferknochen eingesetzter Körper, der als Träger eines Zahnersatzes die Funktion künstlicher Zahnwurzeln übernimmt. Das Kieferimplantat wird in den Kieferknochen eingedreht oder einfach eingesteckt. Das Kieferimplantat verbindet sich durch Osseointegration innerhalb von 3 bis 6 Monaten mit dem umgebenden Kieferknochen zu einer festen, äußerst belastungsfähigen Trägereinheit. Das Kieferimplantat Z ist in der Regel aus Titan hergestellt. Im Allgemeinen kann die vorliegende Erfindung in Verbindung mit jedem Kieferimplantat Z verwendet werden.

Der Heilungskappenklebekörper C kann bereits auf dem Abutmentaufsatz A aufgesetzt sein. Der Heilungskappenklebekörper C dient zur Formung des Zahnfleisches während des Heilungsprozesses. Der Heilungskappenklebekörper C wird mit dem Abutmentaufsatz A verklebt, da er alleine oder die Klebebasis alleine nicht einsatzfähig sind. Er wird bei der Implantation oder bei Freilegung nach der Einheilphase zusammen mit dem Abutmentaufsatz A auf das Kieferimplantat Z aufgesetzt.

Der Kronenklebekörper D ist neben dem Abutmentaufsatz A ein weiteres Aufbauteil der Suprakonstruktion. Der Kronenklebekörper D dient als Basis zum Zementieren einer Zahnkrone G. Der Kronenklebekörper D ist individuell beschleifbar und wird nach dem Heilungsprozess nach einem Abnehmen des Abutmentaufsatzes A mit dem Heilungskappenklebekörper C zusammen mit einem weiteren Abutmentaufsatz A auf das Kieferimplantat Z geschraubt.

Der Kronenklebekörper D ist beispielsweise aus Zirkondioxid gebildet. Der Kronenklebekörper D und der Abutmentaufsatz A können bei genügend hoher Primärstabilität des Implantates Z, beispielsweise wenn die Eindrehkraft des Implantates 35 Ncm übersteigt, während der Implantation eingesetzt werden. Die Versorgung des Abutmentaufsatzes A mit aufgeklebtem Kronenklebekörper D mit einer endgültigen Zahnkrone G, die vollen Kontakt zum Gegenkiefer hat, erfolgt jedoch erst nach vollständigem Einwachsen des Kieferimplantates Z. Eine provisorische Zahnkrone G aus weichem Material, die keinen Kontakt zum Gegenkiefer hat, kann jedoch schon bei der Implantation eingegliedert werden.

Der Abformpfosten E dient zur dreidimensionalen Abformung der räumlichen Gegebenheiten innerhalb der Mundhöhle. Zu diesem Zweck wird der Abformpfosten E zunächst mittels der Abformpfostenschraube F in das Kieferimplantat Z eingeschraubt. Daraufhin wird ein zähflüssiges Abformmaterial verwendet, das sich um den Abformpfosten E legt und daraufhin aushärtet. Nach dem Lösen der Abformpfostenschraube F kann das ausgehärtete Material mitsamt dem Abformpfosten E entnommen werden. Dadurch wird ein Abdruck für einen Zahntechniker erzeugt, der die exakte Position und den Winkel des Kieferimplantats Z angibt.

Die Lage des Kieferimplantats Z im Kieferknochen hat Auswirkungen auf die Realisierung und Möglichkeiten der Suprakonstruktion. Beispielsweise kann es erforderlich sein, die Position der Zahnkrone G gegenüber dem Kieferimplantat Z seitlich zu versetzen. Wird in diesem Fall ein Abutmentaufsatz A verwendet, dessen Klebebasis sich mittig oberhalb des Abutmentaufsatzes befindet, treten bei Belastung der Zahnkrone G hohe Hebel- und Biegekräfte auf, die über den Kronenklebekörper D auf den Abutmentaufsatz A übertragen werden. Dies kann zur Beschädigung des Kronenklebekörpers D führen.

Erfindungsgemäß wird dieses Problem durch einen Abutmentaufsatz gelöst, dessen Klebebasis für den Kronenklebekörper D seitlich versetzt zu einem Befestigungsabschnitt des Abutmentaufsatzes A angeordnet ist.

Die erfindungsgemäßen Formen und Geometrien lassen sich auf verschiedene bekannte Implantatsysteme adaptieren.

Fig. 2 zeigt eine Querschnittsansicht des Heilungskappenklebekörpers C, des Abformpfostens E und des Kronenklebekörpers D an den mit X bezeichneten Stellen aus Fig. 1. Der Heilungskappenklebekörper C und der Kronenklebekörper D weisen einen Hohlraum auf, in den die Klebebasis des Abutmentaufsatzes A formschlüssig einsetzbar ist. Der Abformpfosten E weist einen Schraubkanal für eine Abformpfostenschraube F auf.

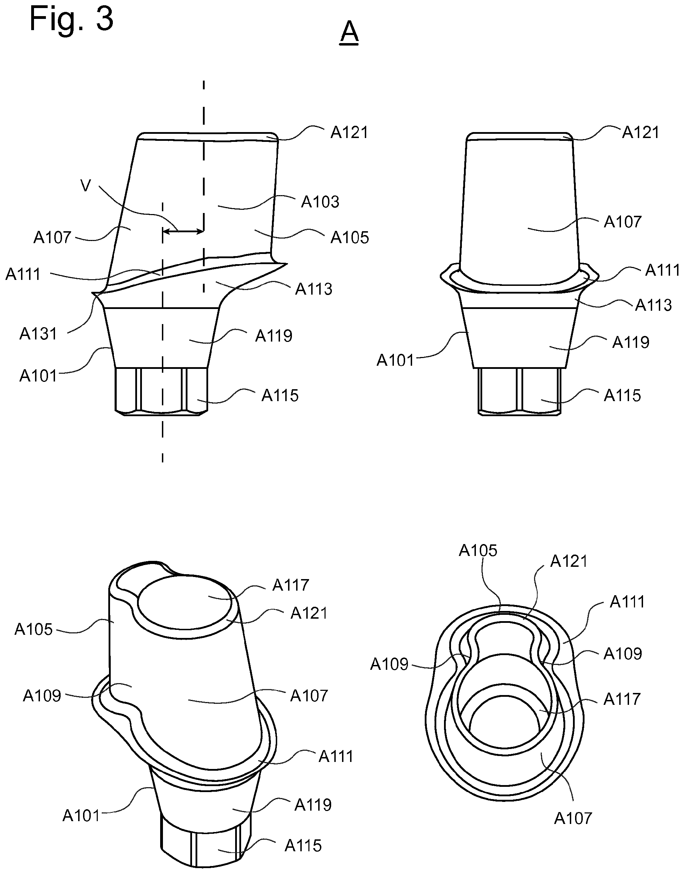

Fig. 3 zeigt mehrere Ansichten einer ersten Ausführungsform des Abutmentaufsatzes A. Der Abutmentaufsatz A umfasst einen Befestigungsabschnitt A101, der zum Befestigen des Abutmentaufsatzes A auf dem Kieferimplantat Z dient und eine seitlich parallel versetze Klebebasis A103 zum Aufkleben des Heilungskappenklebekörpers C und des Kronenklebekörpers D. Daneben dient der Befestigungsabschnitt A101 als Basis für die Klebebasis A103. Die Klebebasis A103 kann eine mikrostrukturierte Oberfläche mit einer Vielzahl von Vertiefungen aufweisen, die einen Durchmesser von 1-1000 µm und eine Tiefe von 1 - 20 µm aufweisen. Beispielsweise beträgt der Durchmesser 0,1 mm und eine Tiefe 0,0025 mm. Die Vertiefungen können über die gesamte Klebbasis A103 hinweg verteilt sein. Durch kann die Haftung einer Klebverbindung erhöht werden.

Die Komgrößen der Klebezemente liegen bei 1 - 20 µm und die Filmdicken zwischen 10 µm und 35 µm. Durch die Vertiefungen wird der Vorteil erreicht, dass der Klebezement in die mikrostrukturierte Oberfläche eindringen kann und sich im Wechselspiel mit der Korngröße eine besonders feste Verbindung ergibt. Zudem ist es möglich zwei Makroretentionen in Form einer oder zwei Erhebungen oder Rinnen in die Klebebasis A103 hinein zu fräsen.

Der Abutmentaufsatz A ist einstückig ausgebildet und kann beispielsweise eine röntgenopake und wiederverwendbare Titankonstruktion (Grad 5) mit optionaler Oberflächenbeschichtung sein. Eine Beschichtung beispielsweise mittels Titannitrid (warmer, goldfarbener Untergrund) oder anderen ultra dünnen Copolymer-Filmen verbessert die Zahnfarbe und reduziert eine Bakterienanhaftung.

Der Unterstützungsabschnitt A113, d.h. die Basalseite des Abutmentaufsatzes, kann eine definierte Mikrorauigkeit von 10 µm bis 40 µm aufweisen, um die Bakterienbesiedlung zu reduzieren und eine Anhaftung von Bindegewebsfasern zu erleichtem. Alternativ kann eine Mikrorauigkeit verwendet werden, bei der das Mittel aus der höchsten Erhebung und dem tiefsten Krater 1,5-2,0 µm beträgt. Der Abstand der Vertiefungen sollte so groß sein, dass sich die Weichgewebszellen in die Rinnen einlagern können und dadurch die Bakterien nicht am Unterstützungsabschnitt A113 entlang in Richtung Knochen wandern können. Die gerichtete Oberflächenrauigkeit des Unterstützungsabschnitts A113 kann mittels Laser-Ablation erzeugt werden.

Der Befestigungsabschnitt A101 umfasst einen Verdrehsicherungsabschnitt A115, der in eine entsprechende Form in dem Kieferimplantat Z formschlüssig einführbar ist und dadurch ein Verdrehen des Abutmentaufsatzes A gegenüber dem Kieferimplantat Z verhindert. Der Verdrehsicherungsabschnitt A115 kann beispielsweise durch eine Sechskantform gebildet werden, die in eine sechskantförmige Aussparung in dem Kieferimplantat Z einsetzbar ist. Im Allgemeinen können jedoch auch andere Formen als Verdrehsicherungsabschnitt A115 verwendet werden, beispielsweise Mehrkantformen oder Vielrundformen (Torx).

Weiter umfasst der Befestigungsabschnitt A101 einen Unterstützungsabschnitt A113 zum seitlichen Unterstützen der Klebebasis A103. Durch den Unterstützungsabschnitt A113 können Hebelkräfte, die auf die Klebebasis 103 wirken, auf den Befestigungsabschnitt A101 übertragen werden. Daneben erhöht der Unterstützungsabschnitt A113 die Festigkeit des Abutmentaufsatzes A zwischen dem Befestigungsabschnitt A101 und der Klebebasis A103. Durch das anatomische, nicht-rotationssymmetrische Durchtrittsprofil des Befestigungsabschnittes A101 wird ein früherer und gleichmäßiger Übergang vom runden Kieferimplantat Z zur natürlichen ovalen Zahnform bewirkt und ein optimiertes Emergenzprofil entsteht.

Zwischen dem Unterstützungsabschnitt A113 und dem Verdrehsicherungsabschnitt A115 ist ein konisch zulaufender Abschnitt A119 zum Verbreitern des Befestigungsabschnittes A101 angeordnet. Der konisch zulaufende Abschnitt A119 erhöht die Festigkeit des Befestigungsabschnittes A101 und ermöglicht, dass im Inneren des Abutmentaufsatzes A ein breiterer Schraubkanal verwendet werden kann als bei einer zylindrischen Ausgestaltung beispielsweise ein konischer Schraubkanal.

Die Klebebasis A103 ist gegenüber dem Befestigungsabschnitt A101 um einen Abstand V parallel zur Seite versetzt. Die Klebebasis A103 umfasst einen Versetzungsabschnitt A105 zum seitlichen Versetzen der Klebebasis A103 gegenüber dem Befestigungsabschnitt A101 und einen Verbindungsabschnitt A107 zum Verbinden des Versetzungsabschnitts A105 mit dem Befestigungsabschnitt A101. Der Versetzungsabschnitt A105 steht seitlich gegenüber einer Befestigungsachse des Befestigungsabschnittes A101 hervor. Der Versetzungsabschnitt A105 ist rucksackartig mit dem Verbindungsabschnitt A107 verbunden. In diesem Sinn bildet der der Verbindungsabschnitt A107 einen zentralen Abschnitt oberhalb des Befestigungsabschnittes A101, während der Versetzungsabschnitt A105 seitlich an dem Verbindungsabschnitt A105 befestigt ist und diesen seitlich überragt.

Der Verbindungsabschnitt A107 wird durch einen Zylinder gebildet, der sich oberhalb des Befestigungsabschnittes A101 befindet. Der Zylinder des Verbindungsabschnittes 107 kann seitlich geneigt sein. Der Versetzungsabschnitt A105 wird durch einen seitlich oder exzentrisch angehängten Zylinder gebildet, durch den zwischen Verbindungsabschnitt A107 und Versetzungsabschnitt A105 zwei gegenüberliegende Vertiefungen A109 gebildet werden, die als Abzugsrillen dienen. Der Versetzungsabschnitt A105 kann auch durch zwei oder mehr aneinandergereihte Zylinderformen gebildet sein, durch die jeweils zwei weitere, gegenüberliegende Vertiefungen A109 gebildet werden.

Durch die rucksackartige, seitliche Verbreiterung der Klebebasis A103 vergrößert sich die Auflagefläche für den Kronenklebekörper D in der Richtung einer Krafteinleitung. Dadurch wird für metallfreie Versorgungen die Frakturgefahr minimiert. Zudem wird eine Krafteinleitung über die Klebebasis A103 ins das Kieferimplantat Z verbessert und die mechanische Stabilität bei nicht axialer Belastung vergrößert sich. Wird bei extremem Platzmangel zum Gegenkiefer oder bei großer Angulation der Zahnachse die Außenwand des Einführkanals A117 entfernt, kann der Versetzungsabschnitt A105 anders als bei konventionellen, rotationssymmetrischen Klebebasen die auftretenden Kräfte aufnehmen und verhindert ein Wegbrechen des Kronenklebekörpers D in oraler Richtung, d.h. zur Mundhöhle hin.

Zwischen dem Versetzungsabschnitt A105 und dem Verbindungsabschnitt A107 ist an beiden Seiten der Klebebasis A105 jeweils eine Vertiefung A109 zum Übertragen einer seitlich wirkenden Kraft angeordnet. Die Vertiefung A109 erstreckt sich entlang einer Aufsetzrichtung des Kronenklebekörpers D oder des Heilungskappenklebekörpers C. Beim Aufsetzen des Kronenklebekörpers D oder des Heilungskappenklebekörpers C wird ein Formschluss mit einem entsprechenden Vorsprung im Inneren einer Aussparung des Kronenklebekörpers D oder des Heilungskappenklebekörpers C hergestellt. Die Vertiefung A109 ist im Querschnitt konkav, d.h. nach Innen gewölbt, und hat die Form einer seitlichen Einwölbung der Klebebasis A103. Allerdings kann die Vertiefung auch andere Ausgestaltungen aufweisen, wie beispielsweise keilförmig sein.

Die Klebebasis A103 umfasst einen umlaufenden Unterstützungsrand A111, der eine basale Auflagefläche für einen unteren Rand des Heilungskappenklebekörpers C oder des Kronenklebekörpers D bildet. Der Unterstützungsrand A111 wird durch den Unterstützungsabschnitt A113 gebildet, der an der Klebebasis A103 übersteht. Durch die durch den Unterstützungsrand A111 vergrößerte Auflagefläche für den Kronenklebekörper D verringert sich eine Frakturgefahr des Kronenklebekörpers D. Der Platz für den Kronenklebekörper D vergrößert sich. Durch eine höhere Schichtstärke des Kronenklebekörpers D, scheint dunkles Titan des Abutmentaufsatzes weniger durch und die Ästhetik verbessert sich.

Der Unterstützungsrand A111 weist eine abgesenkte bukkale Außenschulter A131 auf. Die bukkale Außenschulter A131 des Unterstützungsrandes A111 ist in apikaler Richtung gegenüber dem restlichen Unterstützungsrand A111 verschoben. Dadurch entsteht ein vergrößerter Einsatzbereich auch bei kleiner Schleimhautdicke und ein Metallrand des Abutmentaufsatzes A ist weniger sichtbar. Das durch den Unterstützungsrand A111 erzeugte seitliche, laterale Auflageprofil folgt der Knochenkontur. Dadurch wird die biologische Breite erhalten, verbeitert oder wiederhergestellt. Die Summe der Breite von Bindegewebsattachment und Epithelansatz beträgt bei einem natürlichen Zahn im Durchschnitt 3 mm und wird als "Biologische Breite" definiert.

An der oberen Seite umfasst die Klebebasis A103 eine umlaufende Abrundung A121, so dass ein Verklemmen des Heilungskappenklebekörpers C und des Kronenklebekörpers D beim Aufsetzen verhindert wird.

Im Inneren der Klebebasis A103 ist ein Einführkanal A117 gebildet, der zum Einführen einer Befestigungsschraube B und zur Unterstützung und Führung eines Drehwerkzeugs dient, das zum Eindrehen der Befestigungsschraube B in das Kieferimplantat Z verwendet wird.

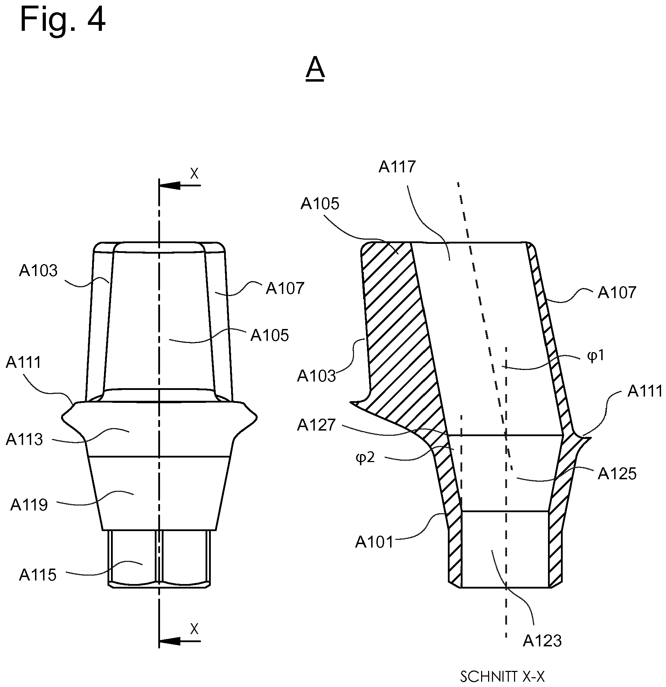

Fig. 4 zeigt eine Seitenansicht und eine Querschnittsansicht des Abutmentaufsatzes A. Die Querschnittsansicht ist durch die mit X bezeichneten Stellen in der Seitenansicht gebildet. Im Inneren des Abutmentaufsatzes A verlaufen der Einführungskanal A117 und ein Schraubkanal A123. Der Schraubkanal A123 dient als Kanal und Aufnahme für die eingeschraubte Befestigungsschraube B. An seinem oberen Ende weist der Schraubkanal A123 einen beispielsweise konisch zulaufenden Abschnitt A125 auf, der zum Befestigen des Abutmentaufsatzes A mittels einer Befestigungsschraube B dient, die ebenfalls einen entsprechenden konischen Abschnitt aufweist.

Statt einem konisch zulaufenden Abschnitt A125 kann der Schraubkanal A123 auch einen rundlich aufgeweiteten oder gewölbten Abschnitt zum Befestigen des Abutmentaufsatzes A mittels einer Befestigungsschraube B umfassen, beispielsweise einen im Querschnitt konkaven, bogenförmigen oder halbrunden Abschnitt. Dadurch wird der Vorteil erreicht, dass die Fertigung des Abutmentaufsatzes vereinfacht wird, da der runde Abschnitt mit einem Radiusfräser hergestellt werden kann, der in Richtung des Einführungskanals A117 eingestochen wird.

Die Achse des Einführkanals A117 und die Achse des Schraubkanals A123 sind mit Strichlinien gezeigt. Der Einführkanal A117 ist gegenüber den Schraubkanal A123 abgewinkelt. Dadurch kann eine Öffnung des Einführkanals A117 in die Mitte der Klebebasis A103 verlagert werden, so dass trotz seitlicher Versetzung der Klebebasis A103 der Einführkanal A117 im Inneren der Klebebasis A103 verläuft.

Durch den abgewinkelten Einführkanal A117 im Inneren der Klebebasis A103 wird ein zusätzlicher Platzgewinn für den Kronenklebekörper D und eine Außenwand der späteren Krone G erreicht. Zudem können ästhetische Anforderungen besser eingehalten werden und der Einsatzbereich gegenüber runden Klebebasen vergrößert sich.

Der Neigungswinkel ϕ1 des Einführungskanals A117 gegenüber dem Schraubkanal A123 entspricht dem Öffnungswinkel ϕ2 des konisch zulaufenden Abschnitt A125. Dadurch wird an einem Übergang zwischen Einführungskanal A117 und Schraubkanal A123 im Zentrum ein kantenfreier Bereich A127 erzeugt, so dass die Befestigungsschraube B in den Abutmentaufsatz A eingeführt werden kann, ohne zu verkannten.

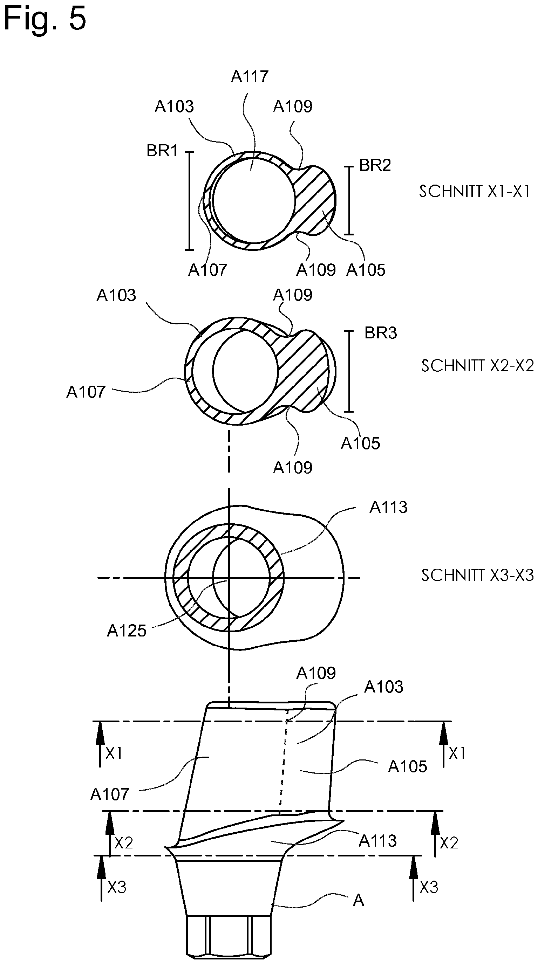

Fig. 5 zeigt mehrere Querschnittsansichten durch den Abutmentaufsatz A an den durch X1, X2 oder X3 bezeichneten Stellen. Die Querschnittsansicht X1-X1 zeigt einen Querschnitt durch die Klebebasis A103 und verdeutlicht das Zusammenspiel zwischen dem Verbindungsabschnitt A107, dem Versetzungsabschnitt A105 und der Vertiefung A109. Der Verbindungsabschnitt A107 mit dem Einführungskanal A117 weist eine Breite BR1 auf. Der Versetzungsabschnitt A105 weist eine Breite BR2 auf. Die Breite BR1 des Verbindungsabschnittes A107 ist größer als die Breite BR2 des Versetzungsabschnittes A105. Dadurch kann an der Seite des Versetzungsabschnittes A105 ein schmalerer Aufbau erreicht werden. Allerdings kann die Breite BR1 des Verbindungsabschnittes A107 auch kleiner oder gleich zu der Breite BR2 des Versetzungsabschnittes A105 sein.

Die an der Stelle X1 im Querschnitt dargestellte Situation findet sich auch in der Querschnittsansicht X2-X2 der Klebebasis 103 wieder. An der Stelle X2 weist der Versetzungsabschnitt A105 eine Breite BR3 auf, die größer als die Breite BR2 an der Stelle X1 ist. Der Versetzungsabschnitt A105 verbreitert sich in Aufsetzrichtung. Dadurch kann eine Kraft auf die Klebebasis D wirksam auf die Seitenbereiche des Versetzungsabschnitts A105 übertragen werden

Der Querschnitt X3-X3 zeigt einen Querschnitt durch das untere Ende des Unterstützungsabschnittes A113 mit dem konisch zulaufenden Abschnitt A125 des Schraubkanals A123.

Im Allgemeinen kann die Klebebasis A103 statt einer ovalen Querschnittsform auch andere Querschnittsformen aufweisen, beispielsweise einen dreieckigen Querschnitt für Frontzähne oder einen rhombenförmigen Querschnitt für große Backenzähne.

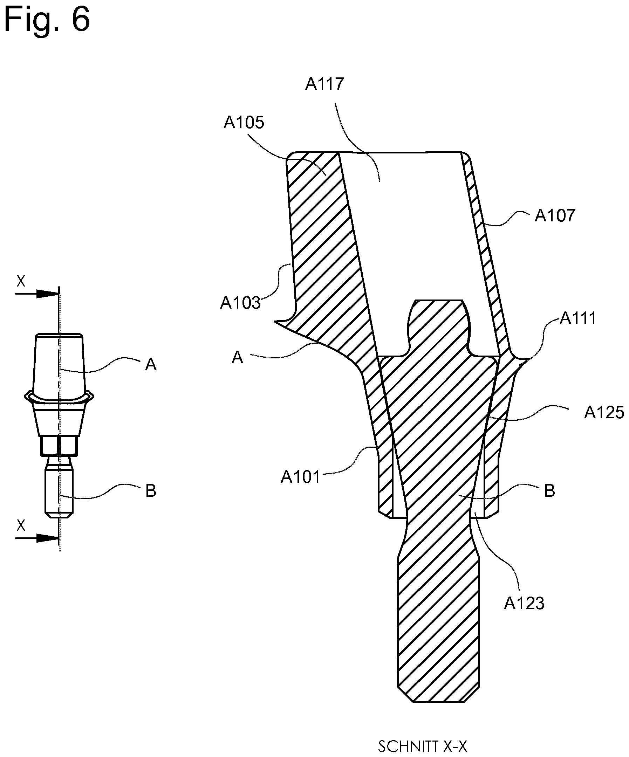

Fig. 6 zeigt den in Fig. 4 dargestellten Abutmentaufsatz A mit eingesetzter Befestigungsschraube B. Im Bereich des konisch zulaufenden Abschnitt A125 bildet sich zwischen Abutmentaufsatz A und der Befestigungsschraube B eine große Kontaktfläche, so dass sich die durch die Befestigungsschraube B ausgeübte Kraft gleichmäßig auf den Abutmentaufsatz A überträgt.

Durch die konische Ausgestaltung der Befestigungsschraube B und die gleichmäßige Kraftverteilung kann ein Abreißen eines Schraubenkopfes verhindert werden. Durch die konische Ausgestaltung wird der gesamte Übergang von Implantat in den Abutmentaufsatz A deutlich gegenüber einer konventionellen Schraube mit Kopf und geradem Schaft verstärkt. Die Stabilität des Abutmentaufsatzes erhöht sich hierdurch um ein Viertel.

Zur Verminderung einer Haft- oder Gleitreibung kann der konische Abschnitt oder der Gewindeschaft der Abutmentschraube B eine Beschichtung aus amorphem hartem oder diamantähnlichem Kohlenstoff oder Teflon aufweisen. In entsprechender Weise kann der konisch zulaufende Abschnitt A125 im Inneren des Abutmentaufsatzes A ebenfalls mit einer Beschichtung aus amorphem hartem oder diamantähnlichem Kohlenstoff versehen sein. Im Allgemeinen kann die Beschichtung aus amorphem hartem oder diamantähnlichem Kohlenstoff auch im Bereich des Einführungskanals A117 oder anderen Abschnitten des Abutmentaufsatzes A angeordnet sein.

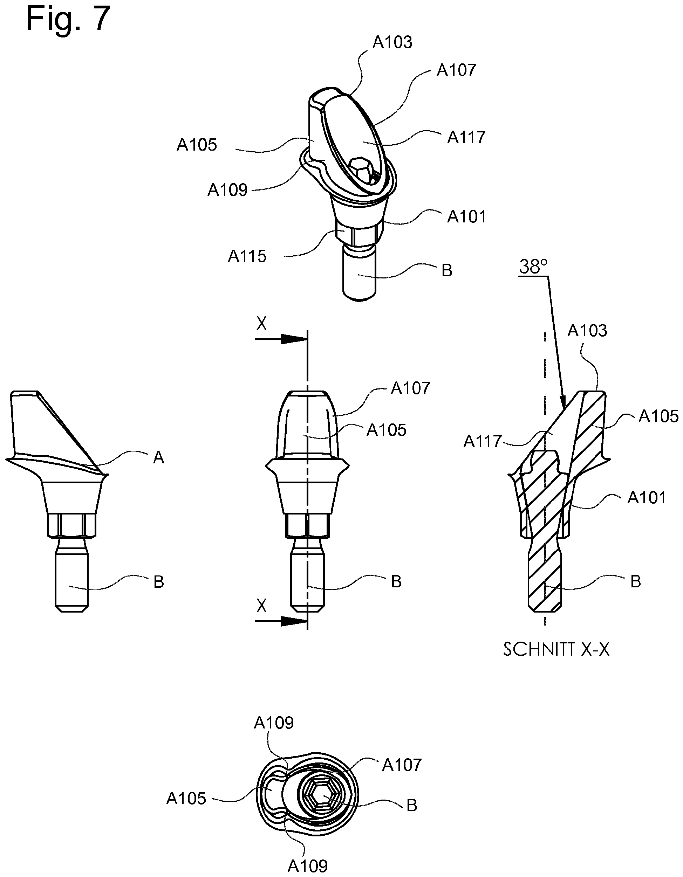

Fig. 7 zeigt mehrere Ansichten einer zweiten Ausführungsform des Abutmentaufsatzes A mit eingesetzter Befestigungsschraube B. In dieser Ausführungsform liegt der Einführungskanal A117 teilweise frei. Der Einführungskanal A117 verläuft nicht vollständig innerhalb der Klebebasis A103. Dies wird durch eine Abschrägung des Verbindungsabschnittes A erreicht. Durch die Abschrägung lässt sich eine größere, seitliche Versetzung der Klebebasis A103 gegenüber dem Befestigungsabschnitt A101 erreichen. Die Abschrägung des Verbindungsabschnitts gegenüber der Achse des Befestigungsabschnittes A101 beträgt beispielsweise 38°.

Durch die Verwendung einer Schraube mit einem hervorstehenden, zentralen Schraubkopf (Inverses Schrauben Design) kann eine größere vestibuläre Abwinkelung des Abutmentaufsatzes A erreicht werden.

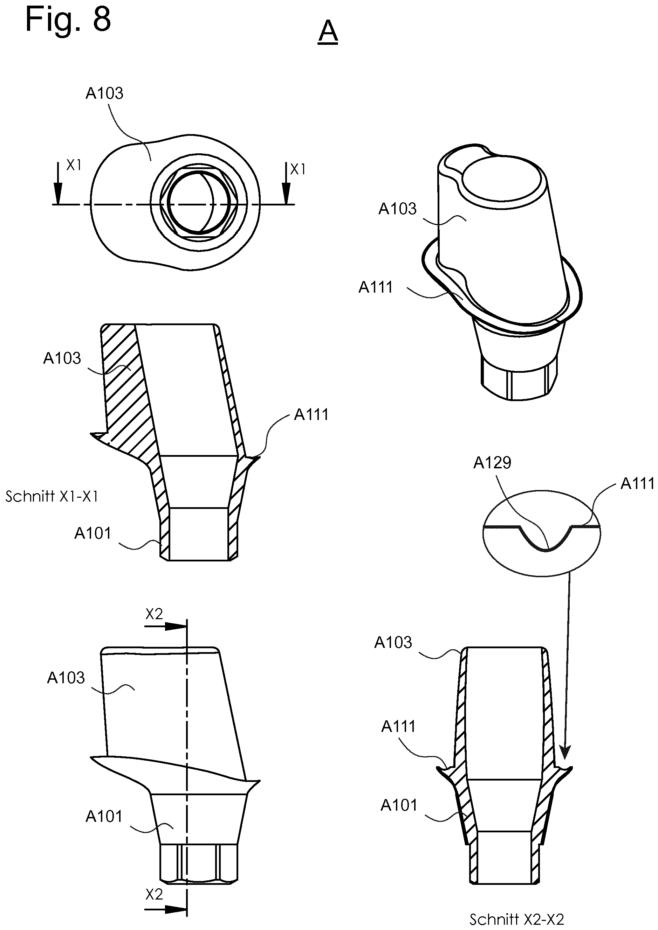

Fig. 8 zeigt mehrere Ansichten einer dritten Ausführungsform des Abutmentaufsatzes. In dieser Ausführungsform weist der um die Klebebasis A103 umlaufende Unterstützungsrand A111 eine Rinne A129 auf. In die Rinne A129 ist ein Rand des Kronenklebekörpers D einsetzbar. Durch die Rinne A129 bildet sich eine basale Auflagefläche, so dass der Kronenklebekörper D unter seitlicher Belastung nicht nach außen abweichen kann. Die Rinne kann bogenförmig oder eckig ausgeformt sein.

Dies ist insbesondere von Vorteil, da der Kronenklebekörper D auf der Klebebasis A103 als Stressbrecher wirken soll und daher eine Anfertigung aus einem weichen Material anzustreben ist. Das weiche Material dient zur Simulation der den natürlichen Zahn umgebenden Fasern und dazu Kraftspitzen auf die Klebebasis A103 und damit auf das Zahnimplantat Z zu minimieren. Das weiche Material kann beispielsweise Kunststoff sein.

Der umlaufende Unterstützungsrand A111 mit der Rinne A129 ermöglicht überall eine basale Unterstützung des Kronenklebekörpers D. Dadurch wird ein Gerüst gebildet, um das sich der Kronenklebekörper D anlagern kann. Bei seitlicher Belastung dient die Rinne A129 in dem umlaufenden Unterstützungsrand A111 als zusätzliche Versplintung und verhindert ein Auswandern des Kronenklebekörpers D. Insbesondere kann eine vorzeitige Lösung des Klebeverbundes verhindert werden.

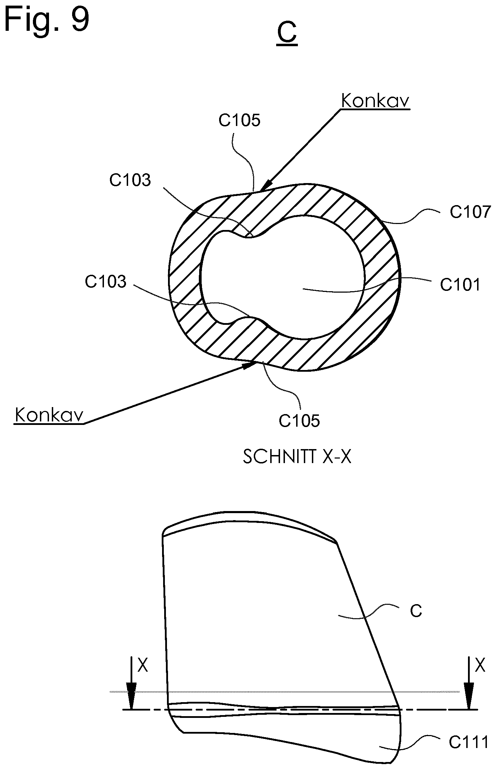

Fig. 9 zeigt eine Seitenansicht und eine Querschnittsansicht des Heilungskappenklebekörpers C. Der Heilungskappenklebekörper C wird während einem Heilungsprozess des Zahnfleisches zusammen mit dem Abutmentaufsatzes A aufgesetzt. Der Heilungskappenklebekörper C weist eine im Querschnitt ovale Aussparung C101 auf, deren Form der Klebebasis A103 entspricht. Die Aussparung C101 bildet einen Hohlraum für die Klebebasis A103. Dadurch kann zwischen dem Heilungskappenklebekörper C und dem Abutmentaufsatz A eine kraft- und formschlüssige Verbindung hergestellt werden.

Im Inneren der Aussparung C101 sind an zwei gegenüberliegenden Seiten zwei Vorsprünge C103 angeordnet, die beim Aufsetzen des Heilungskappenklebekörpers C auf den Abutmentaufsatz A in die entsprechenden Vertiefungen A109 der Klebebasis A103 eingreifen. Die Vorsprünge C103 sind im Querschnitt konvex, d.h. nach außen gewölbt, und bilden eine Auswölbung an der Innenseite der Aussparung C101. Durch die Vorsprünge kann eine seitlich wirkende Kraft auf die Klebebasis übertragen werden.

Der Heilungskappenklebekörper C umfasst eine Außenwand C107, die in den Seitenbereichen zwei im Querschnitt konkave Seitenabschnitte C105 aufweist. Die im Querschnitt konkaven Seitenabschnitte C105 können durch muldenartige Vertiefungen in den Seitenwänden des Heilungskappenklebekörpers C gebildet werden. In diese Bereiche heilt das Zahnfleisch beim Heilungsprozess ein. Das Zahnfleisch heilt rundherum ab und gewinnt in den zur Verfügung stehenden Bereichen mehr Platz, um eine höhere Schichtstärke und mehr Volumen zu bekommen. Je mehr Zahnfleischmasse vorhanden ist, desto besser kann diese gezielt in Richtung Nachbarzahn zur Ausformung der Zahnpapille verdrängt werden.

Die Außenwand C107 umfasst eine abgesenkte Seite C111. Die abgesenkte Seite C111 dient in diesem Fall zum Auflegen auf den Unterstützungsrand A111 mit der abgesenkten bukkalen Außenschulter A131.

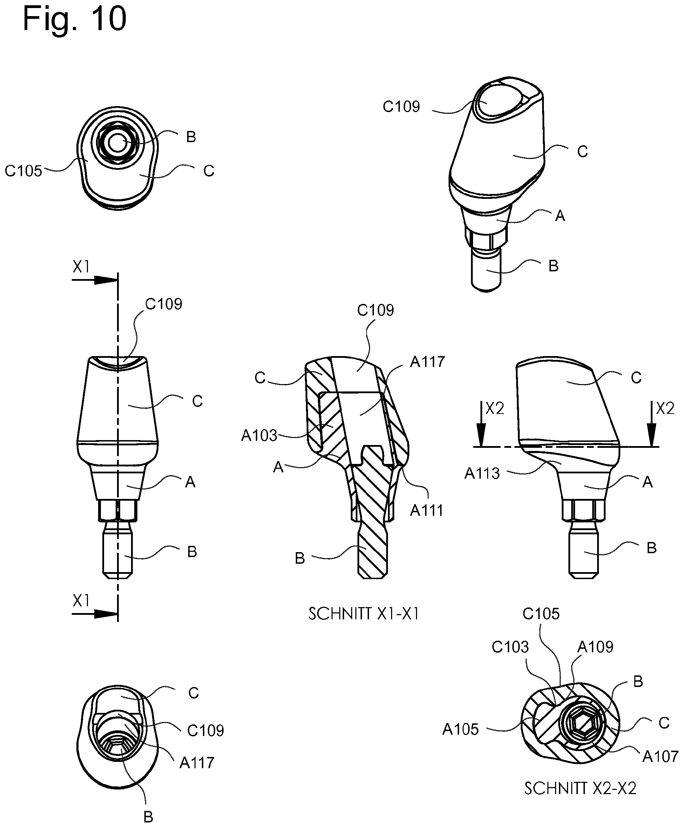

Fig. 10 zeigt mehrere Ansichten des Abutmentaufsatzes A mit aufgeklebtem Heilungskappenklebekörper C und eingesetzter Befestigungsschraube B. Der Heilungskappenklebekörper C weist einen Einführungskanal C109 zum Einführen der Befestigungsschraube B auf. Der Einführungskanal C109 verlängert den Einführungskanal A117 der Klebebasis A103 nach oben hin. Der Rand des Heilungskappenklebekörpers C liegt auf dem umlaufenden Unterstützungsrand A111 der Klebebasis 103 auf. Durch den Einführungskanal C109 kann der Abutmentaufsatz A zusammen mit dem Heilungskappenklebekörper C auf dem Kieferimplantat Z befestigt werden.

Der Querschnitt X2-X2 zeigt das Eingreifen und die formschlüssige Verbindung der Vorsprünge C103 des Heilungskappenklebekörpers C in die Vertiefungen A109 der Klebebasis A103.

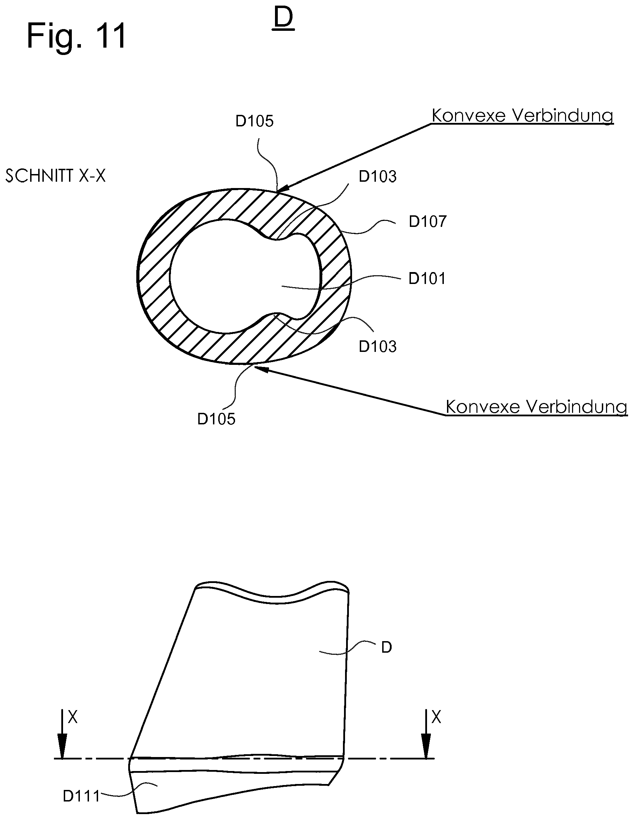

Fig. 11 zeigt eine Seitenansicht und eine Querschnittsansicht des Kronenklebekörpers D. Der Abutmentaufsatz A wird beispielsweise industriell mit dem Heilungskappenklebekörper C oder Kronenklebekörper D verklebt. Ist die Stabilität des Zahnimplantats gering, beispielsweise bei einer Eindrehkraft von 20<x<35 Ncm, wird der Abutmentaufsatz A mit einer Heilungskappe (Healingcap) eingesetzt. Durch die nach okklusal abgerundete und niedrigere Bauform entstehen lediglich geringe Lateralkräfte.

Ist die Eindrehkraft größer als 35 Ncm kann auch sofort ein Abutmentaufsatz A mit Kronenklebekörper D für eine Zahnkrone, d.h. das vollständige Abutment eingesetzt werden. Eine weiche, provisorische Zahnkrone ohne Kontakt zum Gegenkiefer kann dabei zusätzlich aufgesetzt werden. In Bereichen, an denen Knochen aufgebaut worden ist oder die Eindrehkraft weniger als 20 Ncm beträgt, kann das Kieferimplantat geschlossen werden, d.h. ohne Kontakt zur Mundhöhle einheilen. Nach der Einheilphase wird das Kieferimplantat eröffnet und mittels Abformpfosten abgeformt. Danach kann auf dem Abutmentaufsatz A ein individueller Kronenklebekörper konstruiert werden oder es wird ein Abutmentaufsatz A mit vorverklebten Kronenklebekörper D für eine Zahnkrone G, d.h. das vollständige Abutment, eingeschraubt.

Der Kronenklebekörper D dient somit als Basis zur Befestigung einer individuell gefertigten Zahnkrone G. Der Kronenklebekörper D weist eine im Querschnitt ovale Aussparung D101 auf, deren Form der Klebebasis A103 entspricht. Die Aussparung D101 bildet einen Hohlraum für die Klebebasis A103. Dadurch kann zwischen dem Kronenklebekörper D und dem Abutmentaufsatz A eine kraft- und formschlüssige Verbindung hergestellt werden.

Im Inneren der Aussparung D101 sind an zwei gegenüberliegenden Seiten zwei Vorsprünge D103 angeordnet, die beim Aufsetzen des Kronenklebekörpers D auf den Abutmentaufsatz A in die entsprechenden Vertiefungen A109 der Klebebasis A103 eingreifen. Die Vorsprünge D103 sind im Querschnitt konvex und bilden eine Auswölbung an der Innenseite der Aussparung D101. Durch die Vorsprünge kann eine seitlich wirkende Kraft auf die Klebebasis A103 übertragen werden.

Der Kronenklebekörper D umfasst eine Außenwand D107, die in den Seitenbereichen D105 eine im Querschnitt konvexe Krümmung aufweist. Die konvexen Seitenbereiche D105 des Kronenklebekörpers D befinden sich an den gleichen Stellen wie die konkaven Seitenabschnitte C105 des Heilungskappenklebekörper C. Durch die konvexen Seitenbereiche D105 wird das an diesen Stellen gewachsene Zahnfleisch verdrängt, so dass sich das Zahnfleisch zwischenraumfrei um den Kronenklebekörper D legt. Durch das Einbringen eines Kronenklebekörpers D mit konvexer Außengeometrie in einen konkav vorgeformten Zahnfleischbereich wird das Zahnfleisch in Richtung Nachbarzahn / Zahnimplantat verdrängt und begünstig die Ausformung einer Zahnpapille

Die Außenwand D107 umfasst eine abgesenkte Seite D111. Die abgesenkte Seite D111 dient in diesem Fall zum Auflegen auf den Unterstützungsrand A111 mit der abgesenkten bukkalen Außenschulter A131.

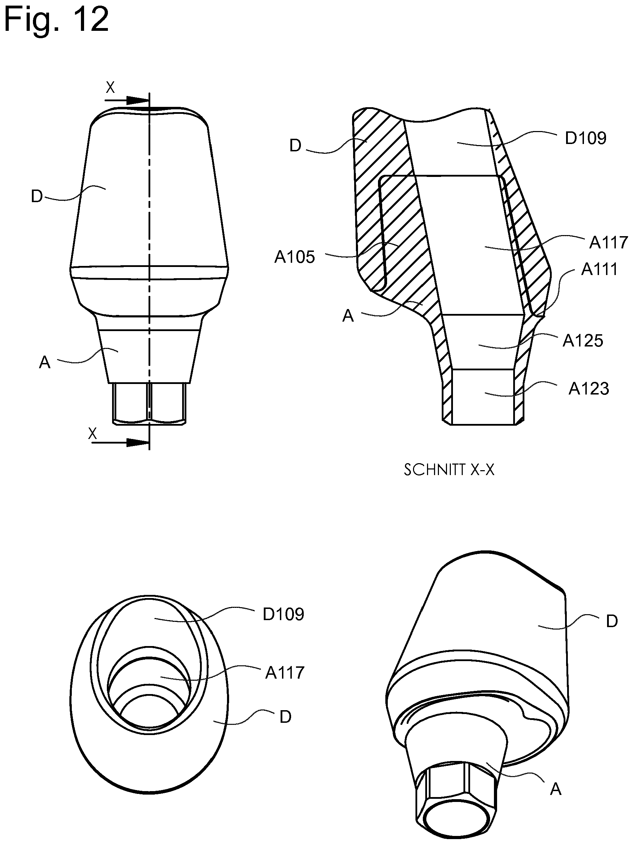

Fig. 12 zeigt mehrere Ansichten des Abutmentaufsatzes A mit aufgeklebtem Kronenklebekörper D. Der Kronenklebekörper D umfasst einen Einführungskanal D109 zum Einführen einer Befestigungsschraube B. Der Einführungskanal D109 verlängert den Einführungskanal A117 der Klebebasis A103 nach oben hin. Der Rand des Kronenklebekörpers D liegt auf dem umlaufenden Unterstützungsrand A111 der Klebebasis 103 auf. Durch den Einführungskanal D109 kann der Abutmentaufsatz A zusammen mit dem Kronenklebekörper D auf dem Kieferimplantat Z befestigt werden.

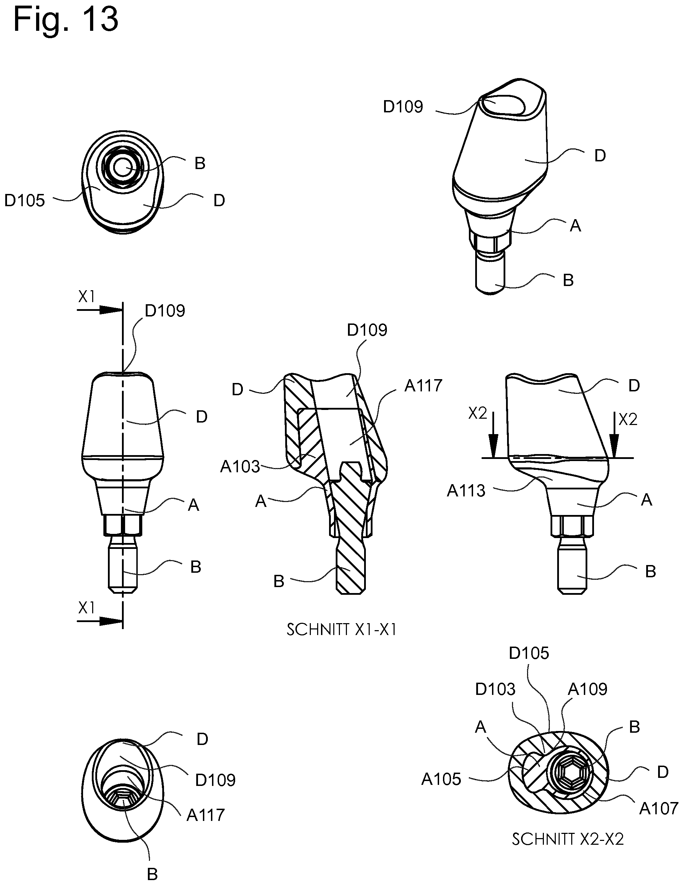

Fig. 13 zeigt mehrere Ansichten des Abutmentaufsatzes A mit aufgeklebtem Kronenklebekörper D und eingesetzter Befestigungsschraube B. Der Querschnitt X2-X2 zeigt das Eingreifen und die formschlüssige Verbindung der Vorsprünge D103 des Kronenklebekörpers D in die Vertiefungen A109 der Klebebasis A103.

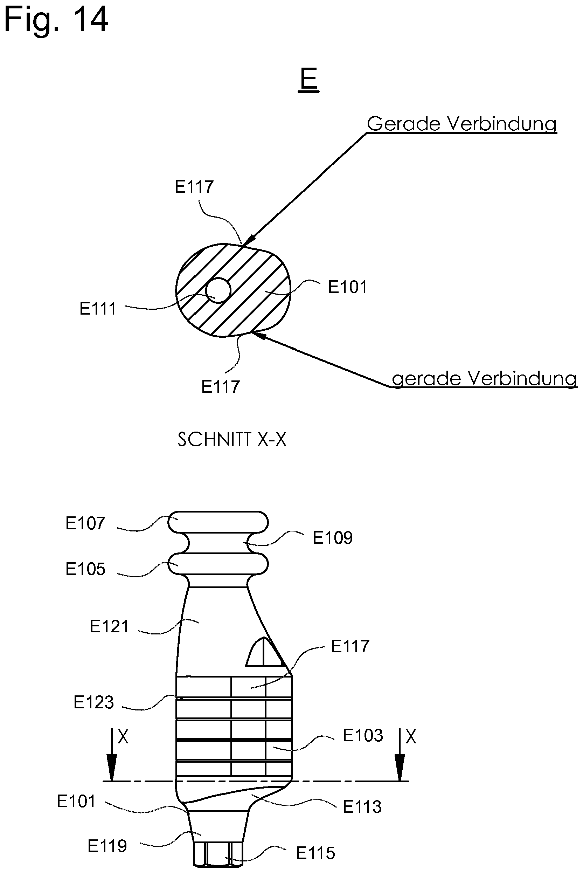

Fig. 14 zeigt eine Seitenansicht und eine Querschnittsansicht des Abformpfostens E. Der Abformpfosten E dient zum Abformen der dreidimensionalen Position des Implantates. Zu diesem Zweck wird der Abformpfosten E mittels einer Abformpfostenschraube F auf dem Kieferimplantat Z befestigt. Der Abformpfosten E umfasst einen Befestigungsabschnitt E101 zum Befestigen des Abformpfostens E auf dem Kieferimplantat Z und einen seitlich versetzten Abformpfostenkörper E103.

Der Befestigungsabschnitt E101 umfasst einen Verdrehsicherungsabschnitt E115, der in eine entsprechende Form in dem Kieferimplantat Z einführbar ist und dadurch ein Verdrehen des Abformpfostens E gegenüber dem Kieferimplantat Z verhindert. Der Verdrehsicherungsabschnitt E115 kann beispielsweise durch eine Sechskantform gebildet werden, die in eine sechskantförmige Aussparung in dem Kieferimplantat Z einsetzbar ist. Im Allgemeinen können jedoch auch andere Formen als Verdrehsicherungsabschnitt E115 verwendet werden, beispielsweise Mehrkantformen oder Vielrundformen (Torx).

Weiter umfasst der Befestigungsabschnitt E101 einen Unterstützungsabschnitt E113 zum seitlichen Unterstützen des Abformpfostenkörpers E103. Durch den Unterstützungsabschnitt E113 können Hebelkräfte, die auf den Abformpfosten E wirken, auf den Befestigungsabschnitt E101 übertragen werden. Daneben erhöht der Unterstützungsabschnitt E113 die Festigkeit des Abformpfostens E zwischen dem Befestigungsabschnitt E101 und der Abformpfostenkörper E103.

Zwischen dem Unterstützungsabschnitt E113 und dem Verdrehsicherungsabschnitt E115 ist ein konisch zulaufender Abschnitt E119 zum Verbreitern des Befestigungsabschnittes angeordnet. Der konisch zulaufende Abschnitt E119 erhöht die Festigkeit des Befestigungsabschnittes E101. Der Befestigungsabschnitt E101 des Abformpfostens E ist äußerlich in gleicher Weise ausgeformt wie der Befestigungsabschnitt A101 des Abutmentaufsatzes A.

Der Abformpfostenkörper E103 ist derart ausgestaltet, dass eine seitliche oder parallele Versetzung gegenüber dem Befestigungsabschnitt erreicht wird. Dadurch kann durch den Abformpfostenkörper E103 die Lage der seitlich versetzen Klebebasis A103 des Abutmentaufsatzes wiedergegeben werden. Der Abformpfostenkörper E103 ist im Querschnitt oval und umfasst einen Schraubkanal E111, in dem die Abformpfostenschraube F verläuft. Der Abformpfostenkörper E103 umfasst horizontal und vertikal verlaufende Rillen oder Markierungen E123, um die Schleimhautdicke an verschiedenen Positionen messen und beurteilen zu können. Die Rillen E123 können zusätzlich zum Aufnehmen einer Abformmasse dienen, so dass der Abformpfosten E innerhalb eines Abdruckes zusätzlich fixiert wird.

Die äußere Querschnittsform des Abformpfostenkörpers E entspricht im Wesentlichen der in Fig. 9 gezeigten Querschnittsform des Heilungskappenklebekörpers C und der in Fig. 11 gezeigten Querschnittsform des Kronenklebekörpers D, außer dass der Abformpostenkörper E103 im Querschnitt gerade verlaufende Seitenabschnitte E117 aufweist. Insofern ist das anatomische Gingivaprofil des Heilungskappenklebekörpers C, des Kronenklebekörpers D und des Abformpfostenkörpers E103 annährend formgleich. Die gerade verlaufenden Seitenabschnitte E117 führen dazu, dass die räumliche Verdrängung des Zahnfleisches zwischen derjenigen des Heilungskappenklebekörpers C und des Kronenklebekörpers D liegt.

An dem oberen Ende umfasst der Abformpfosten E einen ersten und einen zweiten, um den Abformpfosten E umlaufenden Vorsprung E105 und E107. Zwischen den Vorsprüngen E105 und E107 wird eine um den Abformpfosten E umlaufende Aussparung E109 zum Einsetzen eines Verbindungssteges gebildet. Durch diese Ausgestaltung können zwei Abformpfosten E mittels eines metallenen Steges mit definiertem Durchmesser, beispielsweise aus Titan, versplintet werden.

Der Abformpfosten E umfasst einen Verjüngungsabschnitt E121 zur Zahnkrone hin. Der Durchmesser des Verjüngungsabschnittes E121 nimmt von dem Abformpfostenkörper E103 ausgehend in Richtung der tellerförmigen, umlaufenden Vorsprünge E105 und E107 hin ab, d.h. in koronaler Richtung. Durch diesen Verjüngungsabschnitt E121 wird ein Freiraum bei gegeneinander angulierten Kieferimplantaten Z und zu den Nachbarzähnen erhalten.

Die Länge des Abformpfostens E beträgt beispielswese 16,0 mm. Dadurch wird die Abformung bei tief im Zahnfleisch gesetzten Kieferimplantaten Z vereinfacht. Der Abformpfosten E ist durch geeignete zahnmedizinische Werkzeuge kürzbar. Dadurch kann der Abformpfosten E bei der Abformung an die räumlichen Gegebenheiten in der Mundhöhle angepasst werden. Der Abformpfostenkörper E ist beispielsweise aus einer wiederverwendbaren Titankonstruktion mit spezifischer Farbgebung gefertigt und daher in einem Röntgenbild sichtbar (röntgenopak). Daneben kann der Abformpfosten E Markierungsrillen zum Bestimmen einer Dicke der Schleimhaut aufweisen. Der Abformpfosten E kann für eine offene oder geschlossene Abformung verwendet werden.

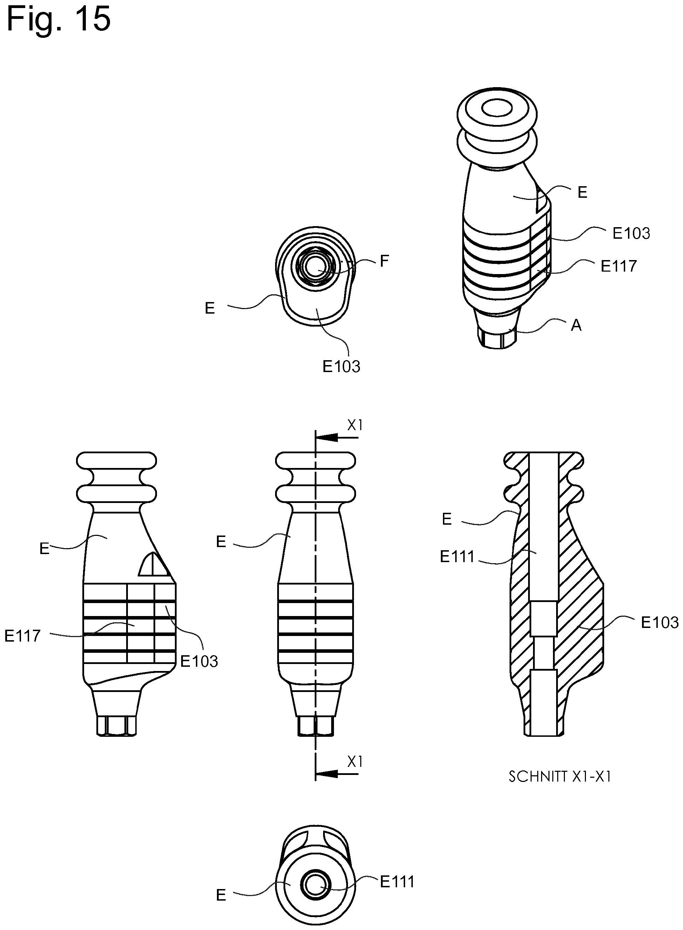

Fig. 15 zeigt weitere Ansichten des Abformpfostens E. Der Schraubkanal E111 für die Abformpfostenschraube F ist im Querschnitt stufig ausgebildet, so dass die Abformpfostenschraube F gegen einen Verlust gesichert ist.

Der Schraubkopf F101 ist zentral auf dem Abutmentschraubenschaft F103 angeordnet. Der Schraubkopf F101 ragt mittig auf der Längsachse des Abutmentschraubenschaft F103 hervor. Der Schraubenkopf F101 kann in eine entsprechend geformte Aussparung eines Drehwerkzeuges eingesetzt werden. In dieser Ausführung des Abformpfostenschraube F kann ein Schraubenschlüssel für die Abutmentschraube F seitlich oder extra-axial aufgesetzt werden, da ein verfügbarer Platz zum Gegenkiefer vergrößert ist. An dem unteren Ende weist die Abformpfostenschraube F ein nicht-gezeigtes Außengewinde auf. Das Außengewinde wird in ein entsprechendes Innengewinde in dem Kieferimplantat Z eingedreht.

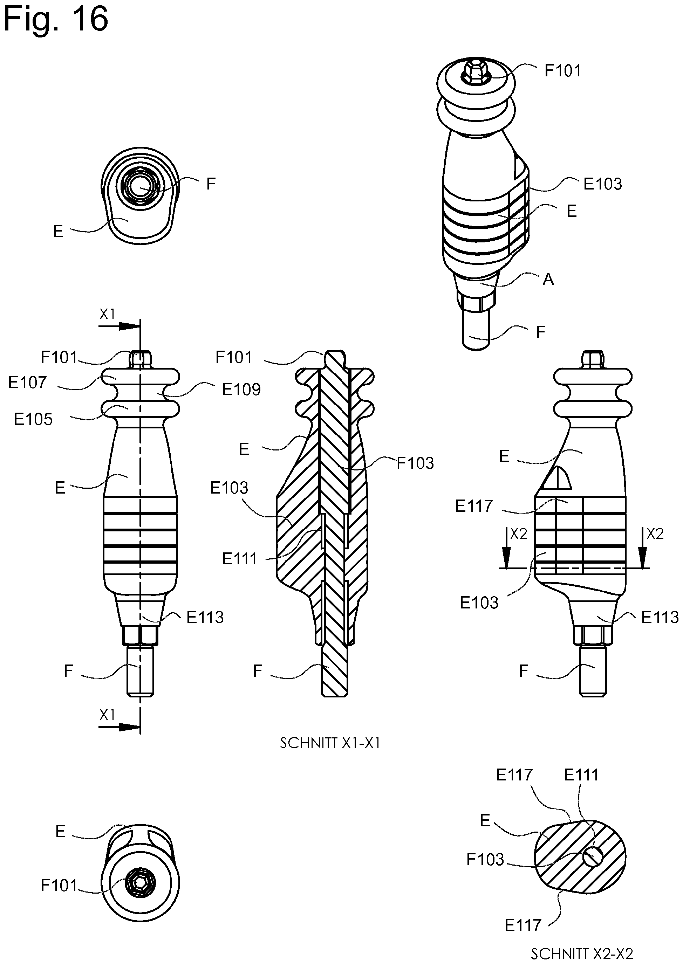

Fig. 16 zeigt weitere Ansichten des Abformpfostens E mit eingesetzter Abformpfostenschraube F.

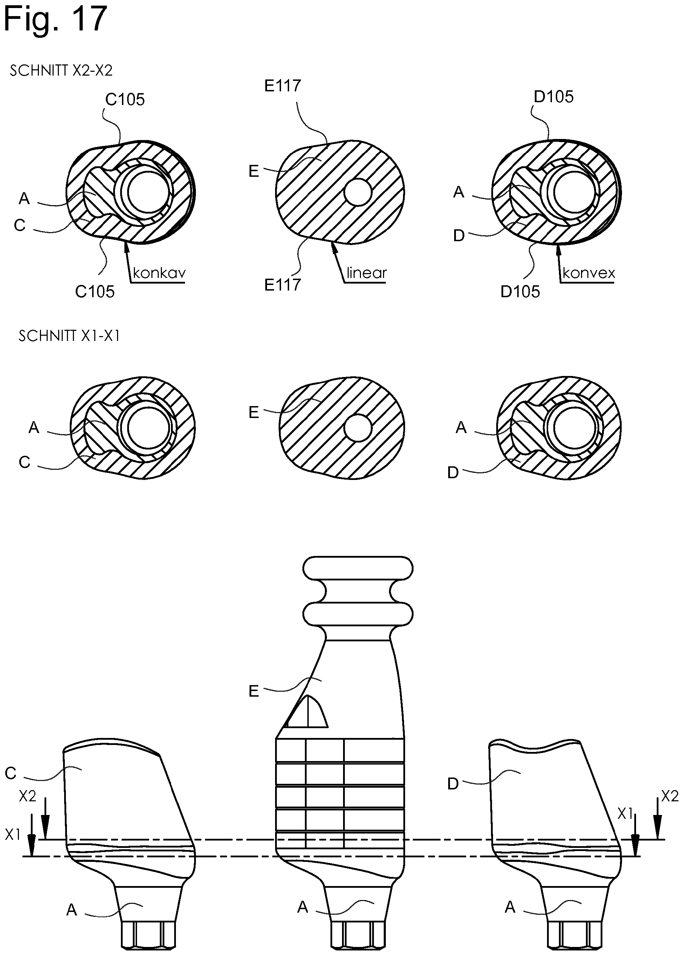

Fig. 17 zeigt mehrere Querschnittsansichten durch den Heilungskappenklebekörper D, den Abformpfosten E und den Kronenklebekörper D. An der mit X1 bezeichneten Stelle weisen der Heilungskappenklebekörper C, der Abformpfosten E und der Kronenklebekörper D die gleiche Querschnittsform auf. An der darüber gelegenen, mit X2 bezeichneten Stelle ändert sich die Querschnittsform ausgehend von des Heilungskappenklebekörpers C mit zwei konkaven, seitlichen Abschnitten C105 über den Abformpfosten E mit gerade verlaufenden Seitenabschnitten E117 bis hin zu dem Kronenklebekörper D mit den konvexen Seitenbereichen D105. Die seitlichen Abschnitte C105, die gerade verlaufenden Seitenabschnitten E117 und die konvexen Seitenbereiche D105 liegen in der Mundhöhle an den gleichen Stellen und bewirken im Laufe des Behandlungsprozesses ein zunehmendes Auseinanderdrücken des Zahnfleisches (Push Papilla Design). Durch den Heilungskappenklebekörper C wird dem Zahnfleisch in der Einheilphase interdental, d.h. zwischen dem Heilungskappenklebekörper und Nachbarzahn, viel Platz zum Verwachsen gegeben. Werden der Abformpfosten E und später der Abutmentaufsatz A mit dem Kronenklebekörper D eingesetzt, wird das Zahnfleisch an diesen Stellen zum Nachbarzahn komprimiert und definiert nach oben (koronal) verdrängt. Dieses Vorgehen führt zur natürlichen und verbesserten Ausformung der Zahnpapille, d.h. des Zahnfleisches im Zahnzwischenraum.

Der Schutzbereich der vorliegenden Erfindung ist durch die Ansprüche gegeben und wird durch die in der Beschreibung erläuterten oder den Figuren gezeigten Merkmale nicht beschränkt.

## Patentansprüche

1. Abutmentaufsatz (A) für ein Kieferimplantat (Z), mit:
- einem Befestigungsabschnitt(A101) mit konischem Abschnitt (A119) zum Befestigen des Abutmentaufsatzes (A) auf dem Kieferimplantat (Z); und
- einer gegenüber dem Befestigungsabschnitt (A101) seitlich versetzten Klebebasis (A103) zum Aufkleben eines Kronenklebekörpers (D) als Basis für eine Zahnkrone (G) oder zum Aufkleben eines Heilungskappenklebekörpers (C),
- wobei die Klebebasis (A103) einen Versetzungsabschnitt (A105) zum seitlichen Versetzen der Klebebasis (A103) gegenüber dem Befestigungsabschnitt (A101) und einen Verbindungsabschnitt (A107) zum Verbinden des Versetzungsabschnitts (A105) mit dem Befestigungsabschnitt (A101) umfasst,
- wobei die Klebebasis (A103) zwischen dem Versetzungsabschnitt (A105) und dem Verbindungsabschnitt (A107) eine Vertiefung (A109) zum Übertragen einer seitlich wirkenden Kraft umfasst,
- wobei der Befestigungsabschnitt (A101) einen Schraubkanal (A123) mit einem konisch zulaufenden Abschnitt (A125) zum Befestigen des Abutmentaufsatzes (A) mittels einer konischen Befestigungsschraube (B) umfasst,
- wobei der Abutmentaufsatz (A) einen Einführungskanal (A117) zum Einführen einer Befestigungsschraube (B) und
- wobei die Achse des Einführungskanals (A117) gegenüber der Achse des Schraubkanals (A123) seitlich abgewinkelt ist.

2. Abutmentaufsatz (A) nach Anspruch 1, wobei die Klebebasis (A103) einen umlaufenden Unterstützungsrand (A111) zum Unterstützen eines aufgeklebten Kronenklebekörpers (D) oder Heilungskappenklebekörpers (C) umfasst.

3. Abutmentaufsatz (A) nach Anspruch 2, wobei der umlaufende Unterstützungsrand (A111) eine Rinne (A129) zum Einsetzen eines Randes des Kronenklebekörpers (D) oder des Heilungskappenklebekörpers (C) umfasst.

4. Abutmentaufsatz (A) nach einem der vorangehenden Anspruche, wobei der Befestigungsabschnitt (A101) einen Unterstützungsabschnitt (A113) zum seitlichen Unterstützen der Klebebasis (A103) umfasst.

5. Abutmentaufsatz (A) nach einem der vorangehenden Anspruche, wobei der Befestigungsabschnitt (A101) einen Verdrehsicherungsabschnitt (A115) zum Verhindern einer Verdrehung des Abutmentaufsatzes (A) gegenüber dem Kieferimplantat (Z) umfasst.

6. Abutmentaufsatz nach Anspruch 1, wobei ein Öffnungswinkel (cp2) des konisch zulaufenden Abschnitts (A125) des Schraubkanals (A123) dem Winkel (cp1) zwischen Einführungskanal (A 117) und Schraubkanal (A 123) entspricht.

7. Abformpfosten (E) zum Aufsetzen auf ein Kieferimplantat (Z), mit: einem Befestigungsabschnitt (E101) zum Befestigen des Abformpfostens (E) auf dem Kieferimplantat (Z); und einem gegenüber dem Befestigungsabschnitt (E101) seitlich versetzten Abformpfostenkörper (E103), wobei der Befestigungsabschnitt (E101) einen Unterstützungsabschnitt (E113) zum seitlichen Unterstützen des Abformpfostenkörpers (E103) umfasst, und wobei der Abformpostenkörper (E103) einen im Querschnitt gerade verlaufenden Seitenabschnitt (E 117) aufweist.

8. Zahnimplantataufbausystem mit einem Abutmentaufsatz nach einem der Ansprüche 1 bis 6, einem Heilungskappenklebekörper, einem Kronenklebekörper und einem Abformpfosten nach Anspruch 7.

## Claims

1. An abutment (A) for a jaw implant (Z) with:
- a fastening portion (A101) with a conical portion (A119) for fastening the abutment (A) on the jaw implant(Z); and
- a bonding base (A103) which is laterally offset with respect to the fastening portion (A101), for the bonding of a crown bonding body (D) as the basis for a dental crown (G) or for the bonding of a healing cap bonding body (C),
- wherein the bonding base (A103) comprises a displacement portion (A105) for the lateral displacing of the bonding base (103) with respect to the fastening portion (A101), and a connection portion (A107) for connecting the displacement portion (A105) with the fastening portion (A101),
- wherein the bonding base (A103) between the displacement portion (A105) and the connection portion (A107) comprises a depression (A109) for transferring a laterally-acting force,
- wherein the fastening portion (A101) comprises a screw channel (A123) with a conically tapering portion (A125) for fastening the abutment (A) by means of a conical fastening screw (B),
- wherein the abutment (A) has an introduction channel (A117) for introducing a fastening screw (B) and
- wherein the axis of the introduction channel (A117) is laterally angled with respect to the axis of the screw channel (A123).

2. The abutment (A) according to Claim 1, wherein the bonding base (A103) comprises a circumferential support rim (A111) for supporting a bonded crown bonding body (D) or healing cap bonding body (C).

3. The abutment (A) according to Claim 2, wherein the circumferential support rim (A111) comprises a groove (A129) for the inserting of a rim of the crown bonding body (D) or of the healing cap bonding body (C).

4. The abutment (A) according to one of the preceding claims, wherein the fastening portion (A101) comprises a support portion (A113) for the lateral supporting of the bonding base (A103).

5. The abutment (A) according to one of the preceding claims, wherein the fastening portion (A101) comprises an anti-twist portion (A115) for preventing a twisting of the abutment (A) with respect to the jaw implant (Z) .

6. The abutment (A) according to Claim 1, wherein an opening angle (cp2) of the conically tapering portion (A125) of the screw channel (A123) corresponds to the angle (cp1) between introduction channel (A117) and screw channel (A123).

7. An impression post (E) for placing onto a jaw implant (Z), with:
a fastening portion (E101) for fastening the impression post (E) on the jaw implant (Z); and
an impression post body (E103) laterally offset with respect to the fastening portion (E101), wherein
the fastening portion (E101) comprises a support portion (E113) for laterally supporting the impression post body (E103), and wherein
the impression post body (E103) has a lateral portion (E117) running in a straight line in cross-section.

8. A dental implant abutment system with an abutment according to one of Claims 1 to 6, a healing cap bonding body, a crown bonding body and an impression post according to Claim 7.

## Revendications

1. Embout de butée (A) pour implant de maxillaire (Z), comportant :
- une section de fixation (A101) dotée d'une section conique (A119) pour la fixation de l'embout de butée (A) sur l'implant de maxillaire (Z) ; et
- une base de collage (A103) décalée latéralement par rapport à la section de fixation (A101) pour le collage d'un corps de collage de couronne (D) servant de base pour une couronne dentaire (G) ou pour le collage d'un corps de collage de calotte de cicatrisation (C),
- la base de collage (A103) comprenant une section de décalage (A105) pour le décalage latéral de la base de collage (103) par rapport à la section de fixation (A101) et une section de connexion (A107) pour connecter la section de décalage (A105) à la section de fixation (A101),
- la base de collage (A103) comprenant, entre la section de décalage (A105) et la section de connexion (A107), un creux (A109) pour transférer une force agissant latéralement,
- la section de fixation (A101) comprenant un canal de vissage (A123) doté d'une section convergeant en forme conique (A125) pour la fixation de l'embout de butée (A) au moyen d'une vis de fixation conique (B),
- l'embout de butée (A) comprenant un canal d'introduction (A117) pour l'introduction d'une vis de fixation (B) et
- l'axe du canal d'introduction (A117) étant coudé latéralement par rapport à l'axe du canal de vissage (A123).

2. Embout de butée (A) selon la revendication 1, dans lequel la base de collage (A103) comprend un bord de soutien périphérique (A111) destiné à soutenir un corps de collage de couronne (D) ou un corps de collage de calotte de cicatrisation (C).

3. Embout de butée (A) selon la revendication 2, dans lequel le bord de soutien périphérique (A111) comprend une rainure (A129) destinée à l'insertion d'un bord du corps de collage de couronne (D) ou du corps de collage de calotte de cicatrisation (C).

4. Embout de butée (A) selon une des revendications précédentes, dans lequel la section de fixation (A101) comprend une section de soutien (A113) destinée à soutenir latéralement la base de collage (A103).

5. Embout de butée (A) selon une des revendications précédentes, dans lequel la section de fixation (A101) comprend une section anti-rotation (A115) destinée à empêcher une rotation de l'embout de butée (A) par rapport à l'implant de maxillaire (Z).

6. Embout de butée (A) selon la revendication 1, dans lequel un angle d'ouverture (cp2) de la section convergeant en forme conique (A125) du canal de vissage (A123) coïncide avec l'angle (cpl) entre le canal d'introduction (A117) et le canal de vissage (A123).

7. Pilier d'empreinte (E) à poser sur un implant de maxillaire (Z), comportant :
une section de fixation (E101) pour la fixation du pilier d'empreinte (E) sur l'implant de maxillaire (Z) ; et
un corps de pilier d'empreinte (E103) décalé latéralement par rapport à la section de fixation (E101),
la section de fixation (E101) comprenant une section de soutien (E113) pour soutenir latéralement le corps de pilier d'empreinte (E103), et
le corps de pilier d'empreinte (E103) présentant une section latérale (E117) à orientation rectiligne en section transversale.

8. Système de construction d'implant dentaire comportant un embout de butée selon une des revendications 1 à 6, un corps de collage de calotte de cicatrisation, un corps de collage de couronne et un pilier d'empreinte selon la revendication 7.
